Europäisches Patentamt

European Patent Office

Office européen des brevets

(11) Numéro de publication: **0 262 733**
**A1**

## (12) DEMANDE DE BREVET EUROPEEN

(21) Numéro de dépôt: 87201833.8

(51) Int. Cl.4: **B60R 22/14**

(22) Date de dépôt: 24.09.87

(30) Priorité: 02.10.86 BE 217252

(43) Date de publication de la demande:
06.04.88 Bulletin 88/14

(84) Etats contractants désignés:
CH DE ES FR GB GR IT LI LU NL SE

(71) Demandeur: **Wautriche, Marie-Louise,
Fernande, Ghislaine
Square Larousse 32
B-1060 Bruxelles(BE)**

(72) Inventeur: **Wautriche, Marie-Louise, Fernande,
Ghislaine
Square Larousse 32
B-1060 Bruxelles(BE)**

(74) Mandataire: **Callewaert, Jean et al
Bureau Gevers S.A. rue de Livourne 7 bte 1
B-1050 Bruxelles(BE)**

(54) **Accessoire pour ceinture de sécurité.**

(57) Accessoire pour ceinture de sécurité, notamment de véhicule automobile, comprenant une bande (1) en une matière flexible dont la largeur est quelque peu supérieure à celle de la sangle (2) de la ceinture, cette bande (1) pouvant être adaptée sur la face (7) de la sangle (2) de la ceinture destinée à venir normalement en contact avec le corps (3) du conducteur ou d'un passager faisant usage de la ceinture.

Fig.1.

EP 0 262 733 A1

## Accessoire pour ceinture de sécurité

La présente invention est relative à un accessoire pour ceinture de sécurité, notamment de véhicule automobile.

Généralement, la ceinture de sécurité, lorsqu'elle est bouclée, provoque une sensation d'oppression et de gêne chez les conducteurs et passagers de véhicules automobiles.

Pour un bon nombre d'individus, surtout de petite taille, la partie de la sangle de cette ceinture, qui est tendue en oblique contre les passagers et conducteurs, p.e. du fait des mouvements du véhicule, et du corps même des passagers et conducteurs, frotte et irrite le cou ainsi que la clavicule.

De plus, les vêtements risquent d'être abîmés rapidement et irrémédiablement par le frottement de cette sangle. En effet, la trace que provoque cette dernière lustre les tissus, coupe, casse ou feutre les poils des manteaux de fourrure et fait luire la partie des vêtements en contact avec cette sangle.

L'invention a essentiellement pour but de remédier d'une manière très simple à ces divers inconvénients et de permettre d'augmenter le confort avec la ceinture à l'état bouclé.

A cet effet, suivant l'invention, cet accessoire comprend une bande en une matière flexible dont la largeur est quelque peu supérieure à celle de la ceinture, cette bande pouvant être adaptée sur la face de la sangle de la ceinture destinée à venir normalement en contact avec le corps du conducteur ou d'un passager faisant usage de la ceinture.

Avantageusement, la bande précitée présente des moyens permettant de fixer cette dernière à coulissement sur la partie de la sangle venant normalement en contact avec l'usager du véhicule.

Suivant une forme de réalisation particulière de l'invention, la bande présente l'allure d'un manchon applati dans lequel peut s'étendre la partie de la sangle de la ceinture pouvant normalement venir en contact avec le corps du conducteur ou passager.

Suivant une forme de réalisation particulièrement avantageuse de l'invention le manchon applati présente deux arêtes longitudinales diamétralement opposées se situant sensiblement dans le plan de la sangle de la ceinture entourée par le manchon et déterminant sur ce dernier deux zones séparées, une première zone formée par la partie précitée du manchon destinée à venir en contact avec le conducteur ou passager, une seconde zone formant la partie extérieure du manchon et s'étendant du côté opposé de la sangle par rapport à la première zone, cette seconde zone étant essentiellement constituée par une matière douce au toucher, telle que de la fourrure ou de la peluche.

D'autres détails et particularités de l'invention ressortiront de la description, donnée ci-après, à titre d'exemples non limitatif, d'une forme de réalisation particulière de l'accessoire pour ceinture de sécurité, avec référence aux dessins annexés.

La figure 1 est une vue schématique en perspective, avec brisure partielle, d'une ceinture de sécurité montée dans un véhicule automobile et équipée d'un accessoire suivant cette forme de réalisation particulière de l'invention.

La figure 2, est, à plus grande échelle, une coupe suivant la ligne II-II de la figure 1.

Dans les deux figures, les mêmes chiffres de référence se rapportent aux mêmes éléments.

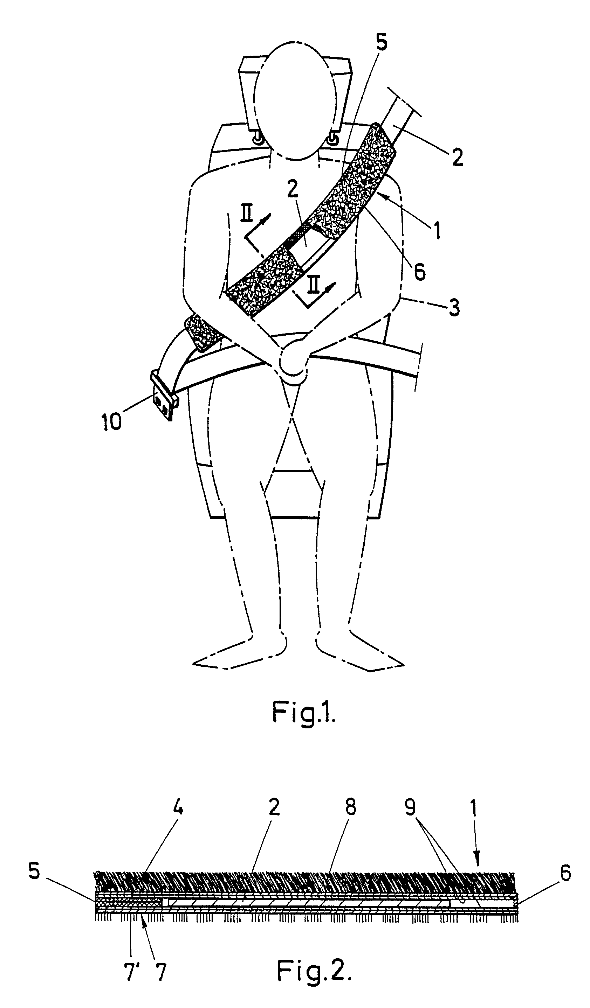

La figure 1 montre un accessoire pour une ceinture de sécurité classique d'un véhicule automobile équipé d'un accessoire suivant une forme de réalisation particulière de l'invention.

Cet accessoire comprend une bande 1 en une matière flexible, telle qu'une matière textile d'une certaine épaisseur et rigidité, dont la largeur est quelque peu supérieure à celle de la sangle 2 de la ceinture.

Cette bande 1 est adaptée, d'une manière amovible, sur la partie de sangle 2 pouvant venir normalement en contact avec le conducteur ou le passager 3 faisant usage de la ceinture. Cette bande est avantageusement montée sur la ceinture de manière à pouvoir coulisser sur cette partie de sangle 2. Ainsi, lors du mouvement du véhicule ou de l'usager de la ceinture, cet accessoire peut rester fixe par rapport à cet usager pendant que la sangle coulisse par rapport à la bande 1.

Plus particulièrement, cette bande 1 présente, dans la forme de réalisation montrée aux figures, l'allure d'un manchon applati dans lequel peut s'étendre la partie de la sangle 2 destinée à venir normalement en contact avec le corps du conducteur ou passager.

Ce manchon est pourvu d'une fermeture 4 s'étendant sur toute sa longueur de manière à permettre ainsi de l'ouvrir latéralement pour pouvoir l'adapter sur la sangle 1 et pour l'enlever de cette dernière.

Cette fermeture est de préférence formée par un double ruban de velours à crochets du type "velcro".

Dans cette forme de réalisation particulière le manchon applati formant la bande 1 en matière flexible présente deux arêtes longitudinales et diamétralement opposées 5 et 6 se situant sensiblement dans le plan de la sangle entourée par le manchon et déterminant sur ce dernier deux zones séparées 7 et 8.

La première zone 7 est formée par la partie du manchon destinée à venir en contact avec le conducteur ou passager 3, tandis que la seconde zone 8 forme la partie extérieure du manchon et s'étend du côté opposé de la sangle 2 par rapport à la zone 7.

La première zone 7 peut présenter des poils dressés rigides ou semi-rigides, notamment des poils de velours, qui ont le double avantage, d'une part, d'immobiliser la bande 1 contre le corps du conducteur ou du passager, indépendamment des mouvements de ces derniers, de la sangle 2 ou du véhicule dans lequel la ceinture est montée et, d'autre part, de protéger les vêtements du lustrage causé par le frottement de la ceinture de sécurité.

De plus, la partie de bande formant la zone 7 peut être rembourrée ou matelassée, de manière à former un coussin entre la sangle 2 et le conducteur ou passager 3.

La zone 8 de la bande 1 est de préférence constituée par une matière douce au toucher, telle que de la fourrure ou de la peluche. Il s'agit notamment de la partie de l'accessoire qui peut entrer en contact avec le visage ou le cou du passager ou conducteur 3.

Par ailleurs, les faces intérieures 9 du manchon destinées à coopérer avec la sangle 2 sont de préférence relativement lisses pour permettre un glissement de cette dernière dans le manchon avec un minimum de frottement.

La bande 1 de l'accessoire, suivant l'invention, présente avantageusement une allure courbe symétrique de manière à permettre d'habiller aussi bien une ceinture de sécurité gauche ou droite. Cette bande peut s'étendre à partir du dessus d'une épaule pour descendre jusqu'à la hanche du côté opposé à cette épaule, comme illustré clairement par la figure 1.

Comme déjà mentionné ci-dessus, la forme de réalisation montrée aux deux figures présente seulement une fermeture 4, notamment à proximité de l'arête 5 du manchon, l'arête opposée 6 pouvant être formée par une simple couture, autour de laquelle les deux zones 7 et 8 de la bande peuvent être articulées lors de la pose de la bande 1 sur la sangle 2 ou lors de l'enlèvement de cette dernière.

Dans certains cas, toutefois, il pourrait être utile de prévoir une telle fermeture aux deux arêtes 5 et 6, de manière à permettre de séparer complètement ces deux zones 7 et 8 , l'une par rapport à l'autre. Ainsi, il pourrait être possible de proposer un accessoire pour ceinture de sécurité comprenant différents types de garnitures déterminant la zone 8 qui pourraient être interchangées suivant le style désiré, par exemple un style sportif, un style habillé etc...

Enfin, des moyens de positionnement, non représentés aux figures, pourraient être prévus pour permettre de maintenir la bande en matière flexible 1 à une distance bien déterminée de la boucle de la ceinture 9, afin d'assurer que cette boucle reste constamment accessible et ne gêne donc pas l'accrochage ou le décrochage de la ceinture.

Il est bien entendu que l'invention n'est pas limitée à la forme de réalisation particulière de l'accessoire représenté aux figures et aux variantes de celle-ci dont mention a été faite ci-dessus, mais que bien d'autres variantes encore pourraient être envisagées sans sortir du cadre de l'invention.

C'est ainsi que la fermeture 4 pourrait être formée par une série de boutons-pression.

Par ailleurs, si l'accessoire suivant l'invention est monté sur la ceinture de sécurité, avant le placement de cette dernière dans le véhicule automobile, il n'est pas indispensable que des moyens permettant de fixer la bande de manière amovible sur la sangle de la ceinture soient prévus. Dans un tel cas, l'accessoire peut donc être constitué d'un manchon souple sans fermeture latérale pouvant être enfilé sur la sangle avant que celle-ci soit installée dans le véhicule.

**Revendications**

1. Accessoire pour ceinture de sécurité, notamment de véhicule automobile, caractérisé en ce qu'il comprend une bande (1) en une matière flexible dont la largeur est quelque peu supérieure à celle de la sangle (2) de la ceinture, cette bande pouvant être adaptée sur la face (7) de la sangle (2) de la ceinture destinée à venir normalement en contact avec le corps du conducteur ou d'un passager (3) faisant usage de la ceinture.

2. Accessoire suivant la revendication 1, caractérisé en ce que la bande précitée (1) présente des moyens permettant de fixer cette dernière à coulissement sur la sangle (2) de la ceinture.

3. Accessoire suivant l'une ou l'autre des revendications 1 et 2, caractérisé en ce qu'elle présente des moyens (4) permettant de fixer la bande de manière amovible sur la sangle (2) de la ceinture.

4. Accessoire suivant l'une quelconque des revendications 1 à 3, caractérisé en ce que la face (7) de la bande précitée destinée à venir en contact avec le corps du passager (3) présente des poils dressés, notamment des poils de velours.

5. Accessoire suivant l'une quelconque des revendications 1 à 4, caractérisé en ce que la bande présente une allure courbe symétrique, de manière à pouvoir s'adapter soit sur une ceinture gauche soit sur une ceinture droite.

6. Accessoire suivant l'une quelconque des revendications 1 à 5, caractérisé en ce que la partie (7) de la bande destinée à venir en contact avec le conducteur ou passager (3) est rembourrée ou matelassée, de manière à former un coussin entre la sangle (2) de la ceinture et le conducteur ou passager.

7. Accessoire suivant l'une quelconque des revendications 1 à 6, caractérisé en ce que la bande (2) présente l'allure d'un manchon applati dans lequel peut s'étendre la partie (7) de la sangle (2) de la ceinture destinée à venir normalement en contact avec le corps du conducteur ou passager (3).

8. Accessoire suivant la revendication 7, caractérisé en ce que le manchon précité présente une fermeture (4) s'étendant sur toute sa longueur permettant ainsi d'ouvrir ce manchon latéralement pour l'adapter sur la sangle (2) de la ceinture ou pour l'enlever de cette dernière.

9. Accessoire suivant la revendication 8, caractérisé en ce que la fermeture est formée par un double ruban de velours à crochets du type "Velcro" s'étendant sur toute la longueur du manchon.

10. Accessoire suivant l'une quelconque des revendications 7 à 9, caractérisé en ce que le manchon applati présente deux arêtes longitudinales diamétralement opposées (5 et 6) se situant sensiblement dans le plan de la sangle (2) de la ceinture entourée par le manchon et déterminant sur ce dernier deux zones séparées (7 et 8), une première zone (7) formée par la partie précitée du manchon destinée à venir en contact avec le conducteur ou passager, une seconde zone (8) formant la partie extérieure du manchon et s'étendant du côté opposé de la sangle (2) par rapport à la première zone, cette seconde zone (8) étant essentiellement constituée par une matière douce au toucher, telle que de la fourrure ou de la peluche.

11. Accessoire suivant la revendication 10, caractérisé en ce que les deux zones (7 et 8) précitées sont montées de manière amovible l'une par rapport à l'autre.

12. Accessoire suivant l'une quelconque des revendications 1 à 11, caractérisé en ce que des moyens de positionnement sont prévus pour permettre de maintenir la bande en matière flexible à une distance déterminée d'une boucle de la ceinture, de manière à assurer que cette boucle soit constamment accessible pour permettre d'accrocher ou de décrocher aisément la ceinture.

Fig.1.

Fig.2.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-U-8 428 562  (NEUWEILER)<br>* page 3, ligne 12 - page 5, ligne 20 * | 1-3,6-10 | B 60 R   22/14 |
| A | | 4 | |
| | --- | | |
| X | DE-U-7 724 731  (OWERBERG)<br>* page 5, ligne 21 - page 6, ligne 11 *<br>----- | 1-3,6-8,10,12 | |

DOMAINES TECHNIQUES RECHERCHES (Int. Cl.4)

B 60 R   22/00

Le présent rapport a été établi pour toutes les revendications

| Lieu de la recherche | Date d'achèvement de la recherche | Examinateur |
|---|---|---|
| BERLIN | 15-12-1987 | STANDRING M A |